# EUROPEAN PATENT APPLICATION

(11) **EP 4 749 791 A1**
(43) Date of publication of application: **27.05.2026**
(21) Application number: 25202240.5
(22) Date of filing: 15.09.2025
(51) Int. Cl.: H01M 50/251, H01M 50/262

(54) **BATTERY CABINET WITH UNIQUE BATTERY MODULE BRACKET**

(30) Priority: 27.09.2024 US 202463700279 P; 09.09.2025 US 202519323590
(71) Applicant: Vertiv Corporation, Westerville, OH 43082 (US)
(72) Inventor: Rudolph, Thomas, Westerville, 43082 (US); Meyer, Adam, Westerville, 43082 (US)
(74) Representative: Cousens, Nico

(57) **Abstract**

A bracket may include a first plate oriented along a first plane comprising at least one first plate attachment hole. A bracket may include a second plate coupled to the first plate and oriented along a second plane, wherein the second plate comprises at least one second plate attachment hole. A bracket may include a third plate coupled to at least one of the first plate and the second plate and oriented along a third plane. The first plate may be couplable to a shelf and the second plate may be couplable to a battery, wherein the first plate includes a tool-access region that includes at least one of the at least one first plate attachment holes, whereupon attachment of the second plate to the battery and a positioning of the battery onto the shelf, the tool-access region extends past a boundary of the battery and along the shelf.

## Description

The present application claims priority to U.S. Provisional Patent Application Number 63/700,279 filed September 27, 2024.

### TECHNICAL FIELD

The present disclosure relates to battery storage cabinets, and more particularly to mounting systems within battery storage cabinets.

### BACKGROUND

Data centers rely heavily on batteries for providing primary or secondary power to servers within the data centers. These batteries are often securely stored in compartments such as battery cabinets. Due to space limitations within the data centers, there is a need to confine sets of batteries into the smallest spaces possible within the battery cabinetry while still allowing individual batteries to be removed quickly if needed from the set of batteries. However, current battery storage systems are unable to increase the packing efficiency of batteries in cabinets while still allowing easy mounting and dismounting of individual batteries from the cabinets. Therefore, there is a need for battery cabinets and battery cabinet storage systems that are able to store batteries more efficiently while still allowing easy mounting and removal of individual batteries.

### SUMMARY

Accordingly, the present disclosure is directed toward a bracket for securing an object such as a battery to a cabinet shelf, a cabinet that includes the bracket, and a method for securing the battery to the cabinet shelf.

In some embodiments, the techniques described herein relate to a bracket including: a first plate oriented along a first plane including at least one first plate attachment hole; a second plate coupled to the first plate and oriented along a second plane, wherein the second plate includes at least one second plate attachment hole; and a third plate coupled to at least one of the first plate and the second plate and oriented along a third plane.

In some embodiments, the techniques described herein relate to a cabinet including: a cabinet frame; at least one shelf configured to store an object; and at least one bracket configured to secure the object to the at least one shelf including: a first plate oriented along a first plane including at least one first plate attachment hole; a second plate coupled to the first plate and oriented along a second plane, wherein the second plate includes at least one second plate attachment hole; and a third plate coupled to at least one of the first plate and the second plate and oriented along a third plane.

In some embodiments, the techniques described herein relate to a method for securing a battery to a shelf of a battery cabinet including: coupling at least one bracket to the battery, the bracket including: a first plate oriented along a first plane including at least one first plate attachment hole; a second plate coupled to the first plate and oriented along a second plane, wherein the second plate includes at least one second plate attachment hole; and a third plate coupled to at least one of the first plate and the second plate and oriented along a third plane; placing the battery onto the shelf; and coupling the at least one bracket to the shelf via a single fastener.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE FIGURES

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims.
FIG. 1A illustrates a perspective view of a cabinet, in accordance with one or more embodiments of the disclosure.
FIG. 1B illustrates a perspective view of a battery attached to two brackets, in accordance with one or more embodiments of the disclosure.
FIG. 1C is a close-up perspective view of the bracket securing the battery to the shelf, in accordance with one or more embodiments of the disclosure.
FIGS. 2A and 2B illustrate perspective views of brackets, respectively, in accordance with one or more embodiments of the disclosure.
FIGS. 3A and 3B illustrate detailed flattened schematics of brackets, respectively, in accordance with one or more embodiments of the disclosure.
FIG. 4 illustrates a process flow diagram depicting a method for securing a battery to a shelf of a cabinet, in accordance with one or more embodiments of the disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present), and B is false (or not present), A is false (or not present) and B is true (or present), and both A and B are true (or present).

In addition, the use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "embodiments" means that a particular element, feature, structure, or characteristic described in connection with the embodiment is included in at least one embodiment disclosed herein. The appearances of the phrase "in embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Disclosed is a cabinet for storage of electronic equipment, such as batteries. The cabinet includes a cabinet frame, at least one shelf for storing the electronic equipment, and at least one bracket configured to secure the electronic equipment to the shelf. The at least one bracket includes three plates arranged in three different planes relative to each other. A first plate is couplable to the shelf, a second plate is couplable to the electronic equipment, and a third plate provides support to the first plate and/or the second plate.

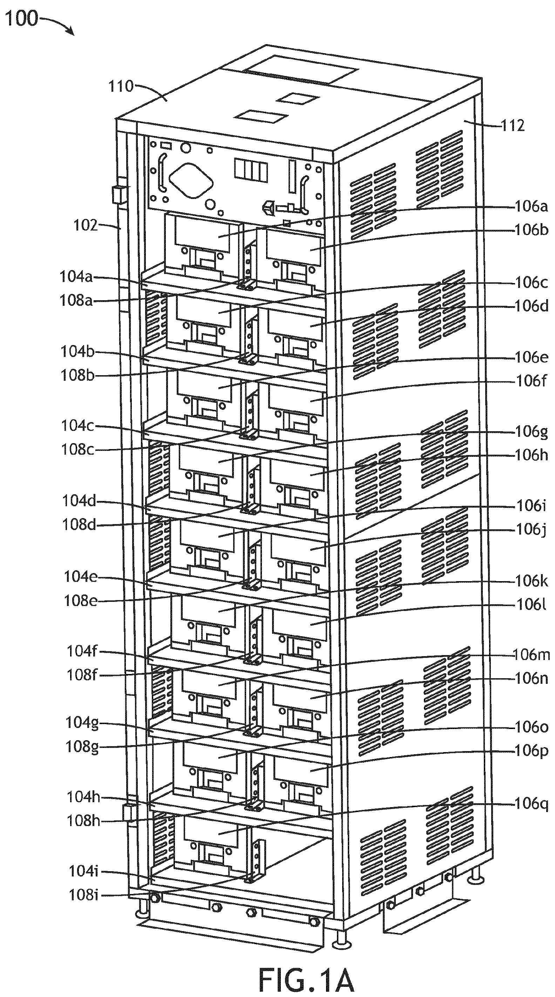

FIG. 1A illustrates a perspective view of a cabinet 100, in accordance with one or more embodiments of the disclosure. The cabinet 100 includes a frame 102, and one or more shelves 104a-i. One or more of the one or more shelves is configured to store one or more objects or units of electronic equipment, such as a battery 106a-q (e.g., the battery also referred to as a battery module). The cabinet 100 secures the one or more batteries 106a-q to the one or more shelves via one or more brackets 108a-i. The cabinet may further include a top panel 110 and/or one or more side panels 112.

The cabinet 100 may include any number of shelves 104. For example, the cabinet 100 may include one or more, two or more, three or more, or nine or more shelves. One or more of the shelves 104 may store any number of batteries 106 or other electronic equipment units. For example, a shelf 104 may be configured to store a single battery 106, two batteries 106, three batteries 106, four batteries 106, or five or more batteries 106. One or more of the batteries 106 may be secured to the one or more shelves 104 by a single bracket 108, two bracket 108, three brackets 108, four brackets 108, or five or more brackets. For example, a battery 106 may be secured to a shelf 104 via a pair of brackets 108 (e.g., a left bracket 108 and a right bracket 108).

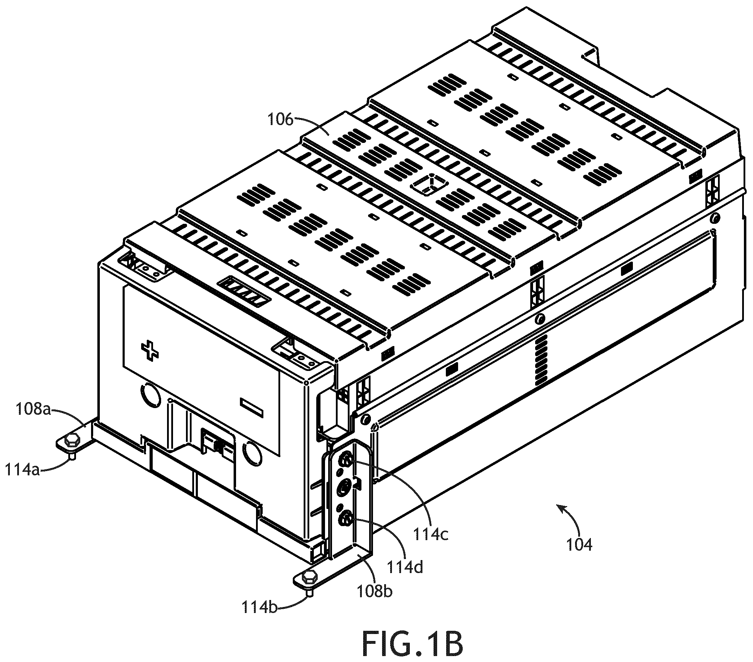

FIG. 1B illustrates a perspective view of a battery 106 attached to two brackets 108a-b (e.g., a left bracket 108a and a right bracket 108b), in accordance with one or more embodiments of the disclosure. The brackets 108 may couple to the battery 106 and shelf 104 via one or more fasteners 114a-d (e.g., screws) or other attachment devices.

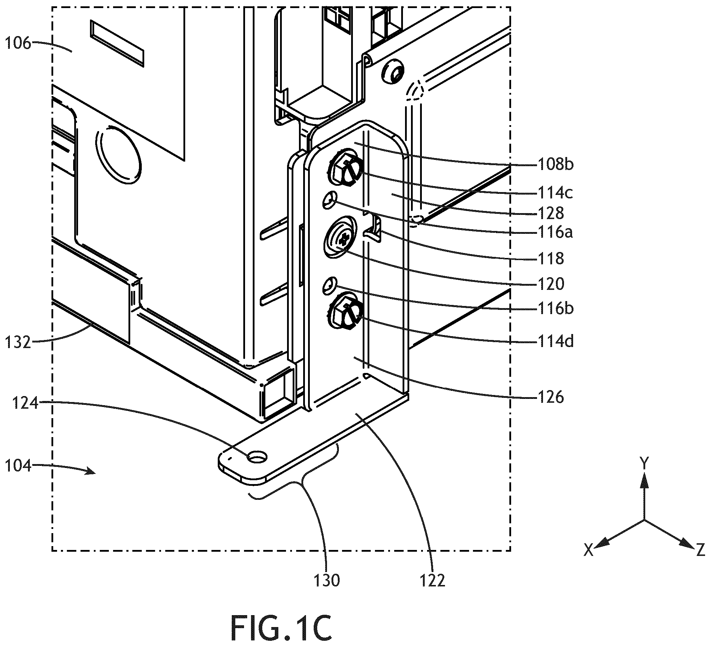

FIG. 1C is a close-up perspective view of the bracket 108b securing the battery 106 to the shelf 104, in accordance with one or more embodiments of the disclosure. The bracket 108 may include one or more alignment holes 116a-b and/or alignment tabs 118 that assist in the operator in properly orienting the bracket 108b to the battery 106. The bracket 108b may also include one or more clearance holes 120 that permit the protrusion of a component of the battery 106 (e.g., a bolt) through the surface of the bracket 108.

In embodiments, the bracket 108 is comprised of at least three plates or sides arranged in at least three different planes. For example, the bracket 108b may include a first plate 122 oriented along a first plane (e.g., an x-axis) that is couplable to the shelf 104 via one or more first plate attachment holes 124. In another example, the bracket 108b may include a second plate 126 that is coupled to the first plate 122 and oriented along a second plane (e.g., a Y-axis). The second plate 126 may be couplable to the battery via one or more second plate attachment holes (e.g., hidden by fasteners 114c-d in FIG. 1C). In another example, the bracket 108b may include a third plate 128 that is coupled to the second plate 126 and/or third plate 122 and is oriented along a third axis (e.g., a Z-axis). While the three plates 122, 126, 128 may be oriented along the X-, Y-, and Z-axis (e.g., the first plate 122 substantially normal to the second plate 126, the second plate 126 substantially normal to the third plate 128, and the third plate 128 substantially normal to the first plate 122), the one or more of the planes 122, 126, 128 may be less than or more than normal to another respective plate. Therefore, the above description should not be interpreted as a limitation of the present disclosure, but merely an illustration.

As used herein, the term "substantially" is intended to mean "largely but not necessarily entirely" or "approximately", as understood by one of ordinary skill in the art. It allows for reasonable deviations from the exact value or condition stated, so long as such deviations do not materially affect the intended function or outcome. For example, a component that is described as being "substantially aligned" may have minor deviations from perfect alignment that do not significantly affect its performance or utility within the context of the invention. In some examples used herein, the term "substantially" is used to describe a relationship between two parts that is within five degrees of the stated relationship (e.g., a substantially colinear relationship is within five degrees of being linear, a substantially perpendicular relationship is within five degrees of being perpendicular, a substantially parallel relationship is within five degrees of being parallel, etc.). In another example, the term "substantially" may refer to an amount that is more than halfway, e.g., greater than 50%, greater than 60%, greater than 70%, greater than 75%, greater than 80%, greater than 85%, greater than 90%, greater than 95%, or greater than 99%.

In embodiments, the first plate 122 includes a tool-access region 130 that enables an operator access to the one or more first plate attachment holes 124. For example, when the second plate 126 is coupled to the battery 106, and the battery is placed on the shelf 104, the tool-access region extends beyond a boundary 132 (e.g., a front-facing boundary) of the battery 106. An operator facing the cabinet 100 would then be able to access the one or more first plate attachment holes 124 without being restricted by another adjacent battery 106 or side panel 112. This arrangement allows an operator to quickly secure the battery 106 to the shelf 104 by brackets 108 (e.g., one left bracket 108a and one right bracket 108b) via a single, highly accessible first plate attachment holes 124 on each bracket 108. When the battery 106 is secured to the shelf 104, one of the one or more first plate attachment holes 124 may be extended 0.5 cm or more, 1.0 cm or more, 1.5 cm or more, 2.0 cm or more, 2.5 cm or more, or 3.0 cm or more outward from the boundary 132 of the battery 106.

In embodiments, the alignment tab extends from the second plate 126 and through (e.g., crossing the plane) of the third plate 128.

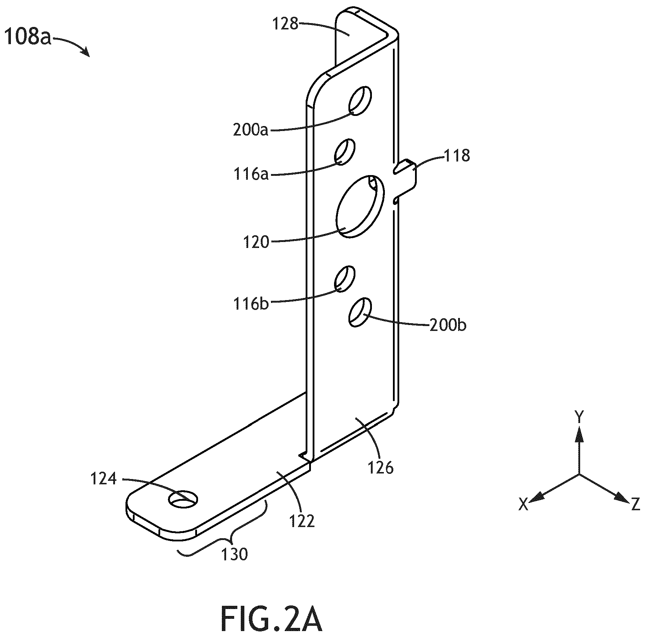

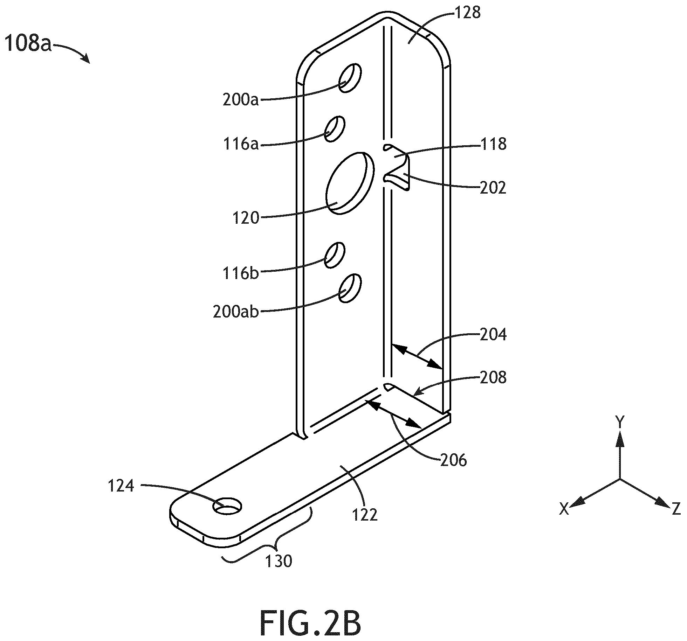

FIGS. 2A and 2B illustrate perspective views of brackets 108a-b, respectively, in accordance with one or more embodiments of the disclosure. Brackets 108a and 108b mirror each other as they are used to secure opposing sides of the battery 106 to the shelf 104. The second plate attachment holes 200a-b are visible. The bracket 108a-b may include a tab hole 202 produced by the formation of the alignment tabs 118 when working the material of the bracket 108a-b. the tab hole may add to the structural integrity of the bracket 108a-b by providing more points of contact for forces to distribute across, which may lead to increased load distribution and resistance to stress.

In embodiments, the bracket 108 is made of a contiguous piece of material. For example, the bracket 108 may be constructed from a relatively flat or substantially flat piece of metal that has been shaped or formed into a three-plane shape that includes the first plate 122, the second plate 126, and the third plate 128. The forming or shaping of the bracket 108 may be performed by stamping or other metal-working methods.

In embodiments, the third plate 128 is bonded to the first plate 122 and/or the second plate 126. For example, and as shown in FIG. 2B, the third plate 128 has a third plate width 204 that may be bonded to a first plate width 206 of the first plate 122 at an interface 208 (e.g., the first plate width 206 and the third plate width 204 being substantially equivalent. The bonding at the interface 208 may include any known bonding techniques including, but not limited to, welding and crimping. The bonding at the interface increases the overall strength of the bracket 108.

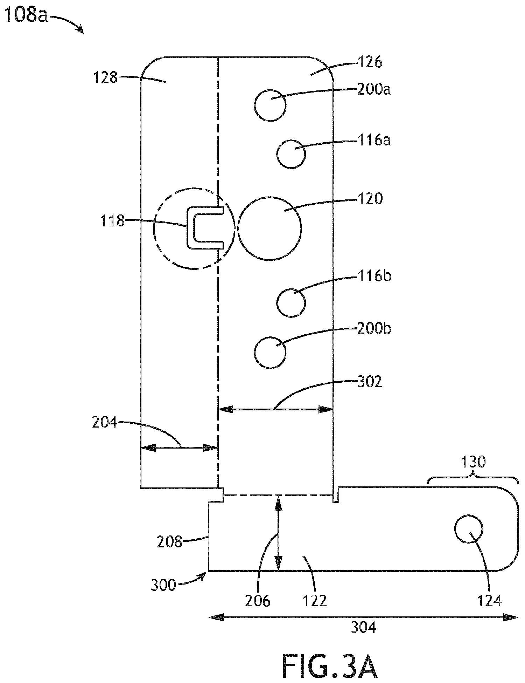

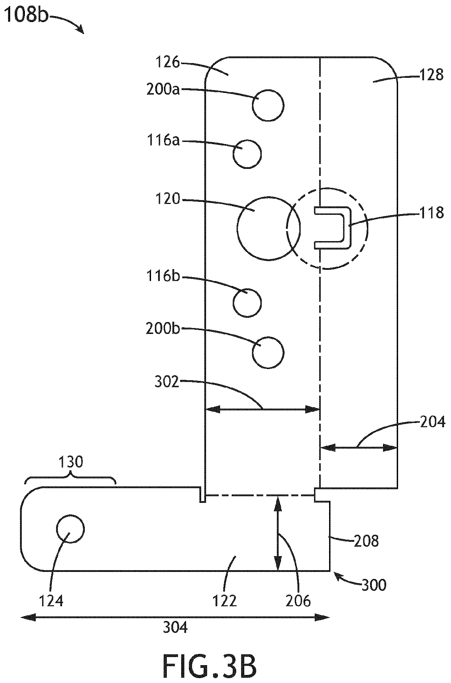

FIGS. 3A-3B illustrate detailed flattened schematics of the brackets 108a-b, in accordance with one or more embodiments of the disclosure. Relative positions of aspects of the bracket to an origin 300 (e.g., located along the first plate width 206 at the interface 208) are included in millimeters (with inches in brackets). In embodiments, a second plate width 302 of the second plate 126 is wider than a first plate width 206 of the first plate 122 and less than one-half a first plate length 304 of the first plate 122. For example, and as shown in FIG. 3B, the second plate width 302 is approximately 26 mm, which is greater than the approximate width of the first plate width 206 (approximately 17 mm). In another example, the first plate length 304 (approximately 62 mm) is more than twice the approximately 26 mm width of the second plate 128. The increased length of the first plate 122 provides the tool-access region 130, as described herein, whereas having the first plate width 206 more narrow than the second plate width 302 enables a smaller footprint of the bracket 108 between adjacent batteries 106, increasing storage efficiency.

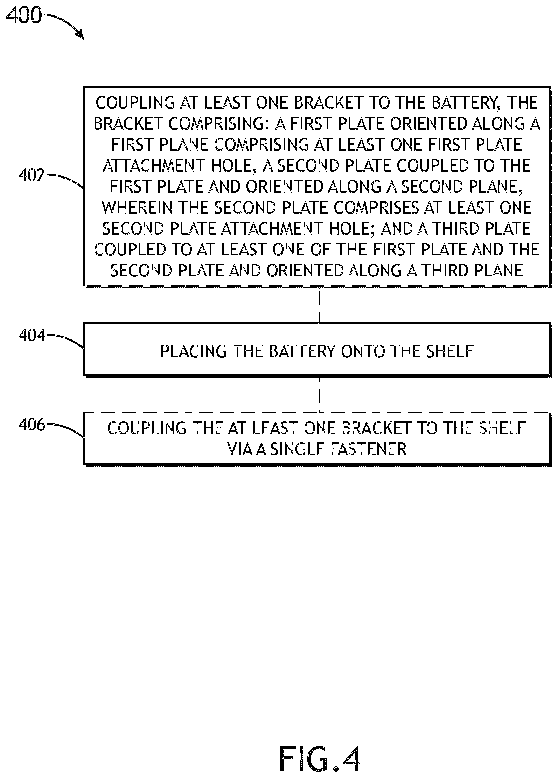

FIG. 4 illustrates a process flow diagram depicting a method 400 for securing a battery 106 to a shelf 104 of a cabinet 100, in accordance with one or more embodiments of the disclosure. The method 400 utilizes the bracket 108 as described within the current disclosure.

In embodiments, the method 400 includes a step 402 of coupling at least one bracket 108 to the battery, the bracket including a first plate oriented along a first plane comprising at least one first plate attachment hole, a second plate coupled to the first plate and oriented along a second plane, wherein the second plate comprises at least one second plate attachment hole, and a third plate coupled to at least one of the first plate and the second plate and oriented along a third plane.

In embodiments, the method 400 includes a step 404 of placing the battery 106 onto the shelf 104. In embodiments, the method 400 includes a step 406 of attaching the at least one bracket 108 to the shelf 104 via a single fastener 114. For example, each bracket 108 may be secured to the shelf by a single fastener 114 (e.g., a screw), allowing a technician to quickly add or swap batteries 106.

It is noted herein the method 400 is not limited to the steps and/or sub-steps provided. The method 400 may include more or fewer steps and/or sub-steps. In addition, the method 400 may perform the steps and/or sub-steps simultaneously. Further, the method 400 may perform the steps and/or sub-steps sequentially, including in the order provided or an order other than provided. Therefore, the above description should not be interpreted as a limitation on the scope of the disclosure but merely an illustration.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the scope of the subject matter described herein. Furthermore, it is to be understood that the invention is defined by the appended claims.

## Claims

1. A bracket comprising:
a first plate oriented along a first plane comprising at least one first plate attachment hole;
a second plate coupled to the first plate and oriented along a second plane, wherein the second plate comprises at least one second plate attachment hole; and
a third plate coupled to at least one of the first plate and the second plate and oriented along a third plane.

2. The bracket of claim 1, wherein the first plate is couplable to a shelf and the second plate is couplable to a battery, wherein the first plate comprises a tool-access region that includes at least one of the at least one first plate attachment holes, whereupon attachment of the second plate to the battery and a positioning of the battery onto the shelf, the tool-access region extends past a boundary of the battery.

3. The bracket of claim 1 or 2, wherein the first plate is substantially normal to the second plate, wherein the second plate is substantially normal to the third plate, and wherein the third plate is substantially normal to the first plate.

4. The bracket of any preceding claim, wherein the bracket is comprised of a contiguous material.

5. The bracket of claim 4, wherein the bracket is further comprised of a substantially flat material that has been formed, wherein the third plate is contiguous with the second plate.

6. The bracket of claim 5, wherein a width of the third plate is bonded to a width of the first plate.

7. The bracket of any preceding claim, further comprising at least one alignment hole.

8. The bracket of any preceding claim, further comprising an alignment tab extending from the second plate and through the third plate.

9. The bracket of any preceding claim, wherein a width of the first plate is substantially equivalent to a width of the third plate.

10. The bracket of claim 9, wherein a width of the second plate is wider than the width of the first plate and less than one-half of a length of the first plate.

11. A cabinet comprising:
a cabinet frame;
at least one shelf configured to store an object; and
a bracket according to any preceding claim and configured to secure the object to the at least one shelf.

12. A method for securing a battery to a shelf of a battery cabinet comprising:
coupling at least one bracket to the battery, the at least one bracket comprising:
a first plate oriented along a first plane comprising at least one first plate attachment hole;
a second plate coupled to the first plate and oriented along a second plane, wherein the second plate comprises at least one second plate attachment hole; and
a third plate coupled to at least one of the first plate and the second plate and oriented along a third plane;
placing the battery onto the shelf; and
coupling the at least one bracket to the shelf via a single fastener.
